# EUROPEAN PATENT APPLICATION

(11) **EP 4 488 737 A1**
(43) Date of publication of application: **08.01.2025**
(21) Application number: 23777814.7
(22) Date of filing: 13.03.2023
(51) Int. Cl.: G02B 7/09, G03B 5/00, G03B 13/36, G02B 27/64, G03B 30/00

(54) **LENS DRIVING DEVICE AND PHOTOGRAPHING MODULE**

(30) Priority: 29.03.2022 CN 202210323586; 29.03.2022 CN 202210323591
(71) Applicant: Ningbo Sunny Opotech Co., Ltd., Ningbo, Zhejiang 315400 (CN)
(72) Inventor: QUE, Jiayao, Ningbo, Zhejiang 315400 (CN); ZHAO, Bojie, Ningbo, Zhejiang 315400 (CN); ZHANG, Liming, Ningbo, Zhejiang 315400 (CN)
(74) Representative: Barker Brettell LLP
(86) International application number: PCT/CN2023/081096
(87) International publication number: WO 2023/185437

(57) **Abstract**

Disclosed in the present invention are a lens driving apparatus and a camera module thereof. The lens driving apparatus includes a movable carrier, a base, a driving mechanism, and a plurality of magnetic yoke pieces. The movable carrier is configured to accommodate a lens assembly; the base and the movable carrier are correspondingly arranged in a spaced manner in a direction of an optical axis; the driving mechanism includes at least one group of coils and at least one group of magnets; the at least one group of coils and the at least one group of magnets are correspondingly arranged such that the driving mechanism is configured to drive the movable carrier to move in an orthogonal plane direction of an optical axis relative to the base; the plurality of magnetic yoke pieces are mounted on the base; each of the plurality of magnetic yoke pieces includes a first portion, a second portion, and a connection portion; the first portion and the second portion integrally extend to two sides of the base from two ends of the connection portion, respectively; the connection portions are located at four corners of the base; and the first portion and the second portion respectively face the at least one group of magnets. Therefore, the lens driving apparatus of the present invention is simpler in structure, and while the miniaturization of the camera module is guaranteed, an Auto Focus (AF) function in the direction of the optical axis of the lens assembly and an Optical Image Stabilization (OIS) function of an orthogonal plane of the optical axis is also be achieved.

## Description

### Technical Field

The present invention relates to the technical field of camera modules, and in particular, to a lens driving apparatus and a camera module.

### Background

With the development trend of thin and light mobile terminals, the structure of a camera module needs to be miniaturized, but at the same time, the imaging quality of the camera module needs to be improved. However, the improvement of the imaging quality of the camera module needs to increase the sizes of a photosensitive device thereof and matching elements thereof, and the driving force of a driving structure also needs to be increased.

A motor is an indispensable element of the high-resolution camera module. In an operation process of the camera module, the motor drives a lens assembly to move in a plurality of directions to realize an optical Auto Focus function (hereinafter referred to as an AF function) and an optical stabilization function (hereinafter referred to as an Optical Image Stabilization (OIS) function). The AF function refers to a function that causes a bracket with a lens assembly to do a linear movement in a direction of an optical axis by the motor to focus on a subject, so as to generate a clear image at an image sensor (CMOS, CCD, etc.) located at a rear part of the lens. The OIS function refers to a function that, when the lens assembly jitters due to vibration, causes the bracket with the lens to adaptively move in a direction of compensating the jitter by the motor, so as to improve image resolution. Increasing the driving force of the motor will inevitably increase the overall size of the camera module, such that there is a contradiction between the improvement of the imaging quality of a module and the miniaturization of an entire structure.

Current electronic devices (e.g., mobile phones) have a large limitation on the size of the camera module, and the occupied size of the motor increases accordingly with the lens assembly. In other words, with the trend towards a larger and heavier lens, it is difficult to correspondingly increase the driving force that the motor can provide. For example, in order to improve the imaging quality of the camera module, a plastic lens in an optical lens is replaced with a glass lens, resulting in an increase in the quality of the optical lens. Meanwhile, in order to drive the optical lens to move, the driving force of the motor also needs to be increased, with limited driving force, if the lens is heavier, a stroke that the motor can drive the lens to move is shorter, affecting focusing and stabilization capabilities. However, in order to realize a better effect of an AF function and an OIS function, moving with a larger stroke is required generally.

In another aspect, due to increased lens weight, the speed that the motor drives the lens assembly to move is slowed down, and the time that the lens reaches a predetermined compensation position is longer, directly affecting focusing and stabilization effects, and thus resulting in unclear images. If the driving force of the motor needs to be increased, the size of the motor needs to be increased, resulting in a complex motor mechanism, an increase in the number of parts, and a tendency to increase the thickness of a motor body. Although a photosensitive chip end may also be provided with a corresponding driving structure, that is, a chip stabilization structure, to cause the photosensitive chip to cooperatively move with the lens assembly such that a driving stroke may be effectively guaranteed while the insufficient driving force of the motor is solved, there is also no feasible technical solution on how to cause the lens of the motor end to cooperatively move with the photosensitive chip end.

### Summary

In an embodiment of the present invention, a lens driving apparatus and a camera module are provided, which are simple in structure to guarantee the miniaturization of the camera module, and achieve an AF function of a lens assembly in a direction of an optical axis and an OIS function of an orthogonal plane of the optical axis.

In another embodiment of the present invention, a lens driving apparatus and a camera module are provided. Through a magnetic attraction force generated between a magnetic yoke piece and a magnet, the stability of a movable carrier in the camera module is maintained, and an effect of centering is recovered.

In another embodiment of the present invention, a lens driving apparatus and a camera module are provided. Through embedded injection molding of a magnetic yoke piece in a base, two sides are adjacent and are connected to arrange the plurality of magnetic yoke pieces, such that a magnetic yoke piece manufacturing process is simplified, and reset resistance of a movable carrier is effectively reduced.

In another embodiment of the present invention, a lens driving apparatus and a camera module are provided. Through the use of a guide groove design with no direction limitation, a supporting mechanism may move in multi-degrees of freedom directions in a guide groove, such that a structure of an OIS carrier is simplified, and multi-degrees of freedom movement of a movable carrier is realized.

In another embodiment of the present invention, a lens driving apparatus and a camera module are provided. By arranging a magnetic yoke piece at a corresponding position of a supporting mechanism, the supporting mechanism is effectively limited in a guide groove through a magnetic attraction force between the magnetic yoke piece and a magnet, and the resistance to the movement of an OIS carrier caused by the magnetic yoke piece is reduced to cause the OIS carrier to rapidly reset to an initial position, thereby reducing requirements for driving force design of an entire module.

In another embodiment of the present invention, a lens driving apparatus and a camera module are provided. By arranging protruding ball bases at four corners of a base, the ball bases are higher than a certain height of a side of the base, so as to preserve a mounting space for an OIS coil, such that an internal space of a motor is fully used.

In another embodiment of the present invention, a lens driving apparatus and a camera module are provided. Through a protruding supporting portion and the mounting design of an AF coil in an AF carrier, effective spaces of the AF carrier and an OIS carrier are rationally used to achieve the miniaturization of an entire structure.

In another embodiment of the present invention, a lens driving apparatus and a camera module are provided. By using a flexible printed circuit (FPC) board as a circuit board, external welding points are moved upward, and at the same time, by arranging corresponding positioning pillars on a side of the ball bases, the accuracy of flexible printed circuit board welding is effectively guaranteed.

In another embodiment of the present invention, a lens driving apparatus and a camera module are provided. By partially bending a side elastic piece, while achieving circuit conductivity, a movement stroke in a horizontal direction is effectively preserved for an OIS carrier, and the resetting of the OIS carrier is also facilitated, thereby achieving dual effects of conduction and connection.

In another embodiment of the present invention, a lens driving apparatus and a camera module are provided. Through the cooperation of an internally-molded circuit and an external circuit, electronic components are highly integrated, and an internal space of a motor is fully used, such that the stability of an entire structure is met while the large stroke movement of the motor is met, thereby improving the working efficiency of the motor.

In order to achieve the above objectives, the present invention provides the following technical solutions.

In an embodiment of the present invention, a lens driving apparatus includes:
A movable carrier, the movable carrier is configured to accommodate a lens assembly;
A base, the base and the movable carrier are correspondingly arranged in a spaced manner in a direction of an optical axis;
A driving mechanism, the driving mechanism includes at least one group of coils and at least one group of magnets; and the at least one group of coils and the at least one group of magnets are correspondingly arranged such that the driving mechanism is configured to drive the movable carrier to move relative to the base in an orthogonal plane direction of the optical axis;
A plurality of magnetic yoke pieces, the plurality of magnetic yoke pieces are mounted on the base; each of the plurality of magnetic yoke pieces includes a first portion, a second portion, and a connection portion; the first portion and the second portion integrally extend to two sides of the base from two ends of the connection portion, respectively; all of the connection portions are located at four corners of the base; and the first portion and the second portion respectively face the at least one group of magnets.

In an embodiment, the connection portion of each of the plurality of magnetic yoke pieces is obliquely connected to the first portion and the second portion, and a width of the connection portion is less than those of the first portion and the second portion.

In an embodiment, each of the plurality of magnetic yoke pieces further includes an extending portion; the extending portion extends outwards from the connection portions at the four corners of the base; an outer end of each of the extending portion has an enlarged portion; and a width of the extending portion is less than those of the first portion and the second portion.

In an embodiment, the lens driving apparatus is further provided with a plurality of guide grooves and a plurality of supporting mechanisms; each of the plurality of guide grooves is respectively provided on opposite surfaces of the movable carrier and the base in an inward-concave manner; each of the plurality of supporting mechanisms is accommodated in each of the plurality of guide grooves; each of the plurality of magnetic yoke pieces extends to a corresponding position of the at least one group of magnets from a corresponding position of each of the plurality of guide grooves; and the supporting mechanism rollably supports the movable carrier to perform displacement in the orthogonal plane direction of the optical axis.

In an embodiment, each of the plurality of guide grooves is of a planar square groove structure; each of the plurality of supporting mechanisms is a ball to cause each of the plurality of supporting mechanisms to move in multiple degrees of freedom along a surface in each of the plurality of guide grooves; and the guide groove on the base is higher than a side of the base to accommodate the at least one group of coils at the side of the base, so as to cause the at least one group of coils to be not higher than each of the plurality of guide grooves on the base.

In an embodiment, each of the plurality of magnetic yoke pieces is arranged in the base through an injection molding process.

In an embodiment, the driving mechanism includes at least one OIS coil and a circuit board; the circuit board is attached to the base; the movable carrier includes an OIS carrier; the at least one group of magnets is fixed on a side of the OIS carrier; the at least one OIS coil is attached to a side of the circuit board and is arranged opposite to the at least one group of magnets in the direction of the optical axis; and the at least one OIS coil and the at least one group of magnets form a first magnetic field loop to drive the OIS carrier to move relative to the base in the orthogonal plane direction of the optical axis for jitter correction.

In an embodiment, the lens driving apparatus further includes a first sensing mechanism; the first sensing mechanism is mounted on the back of the circuit board and is arranged opposite to the at least one group of magnets to detect positions of the at least one group of magnets and the OIS carrier; the base is provided with a first sensor mounting hole; the first sensor mounting hole is located between two adjacent magnetic yoke pieces in the plurality of magnetic yoke pieces; and the first sensing mechanism is accommodated in the first sensor mounting hole of the base.

In an embodiment, the first sensor mounting hole includes an X direction mounting hole and a Y direction mounting hole; the first sensing mechanisms are respectively mounted in the X direction mounting hole and the Y direction mounting hole to detect X direction displacement and Y direction displacement of the OIS carrier; the first sensing mechanism includes an OIS structure IC controller and an OIS position sensor; the OIS position sensor is able to sense a position of the OIS carrier moving relative to the base along an orthogonal plane of the optical axis; and the OIS structure IC controller is able to control a movement direction and stroke of the OIS carrier.

In an embodiment, the circuit board is a flexible printed circuit board; the circuit board includes an flexible printed circuit board bottom surface and a flexible printed circuit board side surface; the flexible printed circuit board bottom surface is attached to an upper surface of the base; the at least one OIS coil is attached to a side of the flexible printed circuit board bottom surface; the flexible printed circuit board side surface is integrally bent and extends in a direction from the flexible printed circuit board bottom surface to the OIS carrier; the flexible printed circuit board side surface and the OIS carrier are radially arranged opposite to each other; and a plurality of welding points are provided at an upper part of the flexible printed circuit board side surface.

In an embodiment, a ball base and a second guide groove are arranged on the base; the ball base integrally protrudes upwards from a position of the four corners of the base; the second guide groove is provided in the ball base; the ball base protrudes from the flexible printed circuit board bottom surface of the circuit board; the at least one OIS coil is not higher than the ball base; the OIS carrier is provided with a first guide groove; the first guide groove corresponds to the second guide groove; balls are accommodated in the first guide groove and the second guide groove; a positioning pillar is arranged on the ball base; the flexible printed circuit board side surface is provided with a positioning hole; the positioning pillar extends from one side of the ball base to the positioning hole; and the positioning pillar is mated with the positioning hole to cause the positioning pillar to fix the flexible printed circuit board side surface.

In an embodiment, the movable carrier further includes an AF carrier; the AF carrier is movably placed in the OIS carrier; a lens assembly is mounted in the AF carrier; the driving mechanism further includes an AF coil; the AF coil is arranged at the periphery of the AF carrier; the AF coil and the at least one group of magnets are radially arranged opposite to each other; and the AF coil and the at least one group of magnets form a second magnetic field loop to drive the AF carrier to move in the direction of the optical axis for AF.

In an embodiment, the AF carrier is provided with a supporting portion, a mounting portion, and a connecting portion; the connecting portion is integrally connected to the supporting portion and the mounting portion; the supporting portion protrudes outward and bears against the at least one group of magnets; the AF coil is arranged at the periphery of the mounting portion; and a position of the mounting portion is lower than that of the connecting portion to cause the AF coil to maintain between the mounting portion and the connecting portion.

In an embodiment, the lens driving apparatus further includes a second sensing mechanism; the second sensing mechanism includes an AF structure IC controller, an AF position sensor, and an AF sensing magnet; the AF sensing magnet is mounted in the OIS carrier; the AF position sensor and the AF structure IC controller are mounted in the AF carrier; the AF sensing magnet and the AF position sensor are radially arranged opposite to each other such that the AF position sensor is able to sense a position of the AF carrier moving relative to the AF sensing magnet in the direction of the optical axis; and the AF structure IC controller is able to control a movement direction and stroke of the AF carrier.

In an embodiment, the OIS carrier is provided with a first accommodating cavity, a second accommodating cavity, and a supporting accommodating space; the first accommodating cavity is provided at an opposite corner of the OIS carrier; the AF sensing magnet is accommodated in the first accommodating cavity such that the second accommodating cavity is able to accommodate the at least one group of magnets; and the supporting accommodating space accommodates the supporting portion of the AF carrier.

In an embodiment, the movable carrier further includes an elastic support member; the elastic support member is connected to the AF carrier and the OIS carrier such that the elastic support member is able to maintain the AF carrier in a center state of the OIS carrier; the elastic support member includes an upper elastic piece, a lower elastic piece, and a plurality of side elastic pieces; the upper elastic piece is movably connected to upper surfaces of the AF carrier and the OIS carrier; the lower elastic piece is movably connected to lower surfaces of the AF carrier and the OIS carrier; and each of the plurality of side elastic pieces is electrically connected to the circuit board and the upper elastic piece or the lower elastic piece to electrically conduct an embedded circuit in the AF carrier, so as to cause the embedded circuit to electrically connect the AF coil and the second sensing mechanism.

In an embodiment, one end of each of the plurality of side elastic pieces is fixedly connected to the base, and an other end of each of the plurality of side elastic pieces is fixedly connected to the OIS carrier, so as to cause the movement of the OIS carrier along the orthogonal plane of the optical axis to reset; each of the plurality of side elastic pieces includes a circuit exporting piece, a circuit importing piece, and a connection circuit; the circuit importing piece is electrically connected to the circuit board; the circuit exporting piece is electrically connected to the upper elastic piece or the lower elastic piece such that the connection circuit is able to be electrically connected to the circuit exporting piece and the circuit importing piece; the connection circuit includes a linear portion and a bending portion; the bending portion is of a multi-section bending structure; the linear portion is electrically connected to the circuit importing piece and the bending portion; and the bending portion is electrically connected to the linear portion and the circuit exporting piece.

In an embodiment, the base is provided with a plurality of positioning protrusions; the positioning protrusion protrudes outward from a side surface of the ball base; the positioning protrusion is attached to the side surface of the ball base and fixedly connected to the positioning protrusion; the circuit exporting piece is attached to a side surface of the OIS carrier; the elastic support member is provided with two groups of the plurality of side elastic pieces; each group of each of the two groups of plurality of side elastic pieces is respectively located two side corners of the OIS carrier; the plurality of side elastic pieces of one of the two side corners are electrically connected to the circuit board and the upper elastic piece; the plurality of side elastic pieces of the other one of the two side corners are electrically connected to the circuit board and the lower elastic piece; and the embedded circuit of the AF carrier is molded in the AF carrier in an injection manner.

In an embodiment, a number of the plurality of magnetic yoke pieces is four, a number of the at least one OIS coils, a number of the at least one group of magnets, and the number of the plurality of magnetic yoke pieces is the same, and the at least one group of magnets is arranged along four sides of the OIS carrier.

In another embodiment of the present invention, a lens driving apparatus includes:
A movable carrier, the movable carrier includes an AF carrier and an OIS carrier. The AF carrier accommodates a lens assembly, and the OIS carrier accommodates the AF carrier;
A base, the base and the OIS carrier are correspondingly arranged in a spaced manner in a direction of an optical axis;
A driving mechanism, the driving mechanism includes an AF coil, an OIS coil, and a group of magnets. The AF coil is arranged at the periphery of the AF carrier, the AF coil and the group of magnets are radially arranged opposite to each other, the OIS coil is arranged above the base, and the OIS coil and the group of magnets are axially arranged opposite to each other;
A guide groove, each of the plurality of guide grooves are respectively provided on opposite surfaces of the OIS carrier and the base in an inward-concave manner, and a guide groove on the base of the guide grooves is higher than a side of the base to accommodate the OIS coil at the side of the base;

Supporting mechanisms, each of the plurality of supporting mechanisms is accommodated in the guide groove, and the supporting mechanism moves in multiple degrees of freedom along a surface in the guide groove.

In another embodiment, a camera module includes:
the lens driving apparatus;
a lens assembly, the lens assembly is provided with at least one lens;
a photosensitive assembly, a base is arranged between the photosensitive assembly and the lens assembly such that the photosensitive assembly is able to sense light for imaging;

In an embodiment, the base is further provided with bottom corner protrusions; the bottom corner protrusions are arranged at four corner positions of a lower surface of the base; sensing elements are arranged in the bottom corner protrusions to sense a position of a photosensitive chip and return position information of the photosensitive chip to a control center; and the photosensitive chip is connected to a stabilization motor.

### Brief Description of the Drawings

Fig. 1 is a three-dimensional structural view of a lens driving apparatus according to preferred embodiments of the present invention.
Fig. 2 is an explosive view of a lens driving apparatus according to the above embodiments of the present invention.
Fig. 3 is a three-dimensional view of an internal structure of a lens driving apparatus according to preferred embodiments of the present invention.
Fig. 4 is a schematic cross-sectional view of a camera module according to the above embodiments of the present invention.
Fig. 5 is a side view of an internal structure of a lens driving apparatus according to preferred embodiments of the present invention.
Fig. 6 is a schematic diagram of a motor circuit according to the above embodiments of the present invention.
Fig. 7 is a schematic diagram of an embedded circuit in an AF carrier according to the above embodiments of the present invention.
Fig. 8a and Fig. 8b are schematic structural diagrams of a side elastic piece according to the above embodiments of the present invention.
Fig. 9 is a schematic structural diagram of an AF carrier according to the above embodiments of the present invention.
Fig. 10 is a schematic structural diagram of an OIS carrier according to the above embodiments of the present invention.
Fig. 11 is a bottom view of an OIS carrier according to the above embodiments of the present invention.
Fig. 12 is a bottom view of a lens driving apparatus according to the above embodiments of the present invention.
Fig. 13 is a three-dimensional structural view of a base and a circuit board according to the above embodiments of the present invention.
Fig. 14 is a schematic plan view of a magnetic yoke piece and a guide groove according to the above embodiments of the present invention.

In the drawings: 1, Lens assembly; 2, Lens driving apparatus; 10, Housing; 11, Light hole; 12, Avoidance hole; 20, Movable carrier; 21, AF carrier; 211, AF hole; 212, Supporting portion; 213, Mounting portion; 214, Connecting portion; 215, Embedded circuit; 22, OIS carrier; 221, OIS hole; 222, First accommodating cavity; 223, Second accommodating cavity; 224, Supporting accommodating space; 225, Bump; 226, First guide groove; 30, Driving mechanism; 31, AF coil; 32, OIS coil; 33, Magnet; 34, Circuit board; 341, flexible printed circuit board bottom surface; 342, flexible printed circuit board side surface; 343, Conduction point; 3421, Positioning hole; 346, Welding point; 23, Elastic support member; 231, Upper elastic piece; 232, Lower elastic piece; 233, Side elastic piece; 2331, Circuit importing piece; 2332, Circuit exporting piece; 2333, Connection circuit; 2334, Linear portion; 2335, Horizontal portion; 2336, Vertical portion; 2337, Bending portion; 50, Base; 51, Base hole; 52, Ball base; 521, Second guide groove; 53, Sensor mounting hole; 531, X direction mounting hole; 532, Y direction mounting hole; 54, Positioning pillar; 55, Positioning protrusion; 56, Bottom surface bump; 60, Magnetic yoke piece; 61, First portion; 62, Second portion; 63, Connection portion; 64, Extending portion; 65, Enlarged portion; 71, First sensing mechanism; 711, OIS structure IC controller; 712, OIS position sensor; 72, Second sensing mechanism; 721, AF structure IC controller; 722, AF position sensor; 723, AF sensing magnet; and 724, Weight.

### Detailed Description of the Embodiments

The present invention is further described below with reference to specific embodiments. It is to be noted that, without conflict, new embodiments can be formed by any combination between the embodiments described below or between the technical features.

In descriptions of the present invention, it is to be noted that, for directional words, for example, direction or position relationships indicated by terms such as "center", "transverse", "longitudinal", "length", "width", "thickness" "upper", "down", "front", "rear", "left", "right", "vertical", "horizontal", "top", "bottom", "interior", "exterior", "clockwise", "anticlockwise" and the like are direction or position relationships based on the accompanying drawings, and are merely intended to facilitate the descriptions of the present invention and simplify the descriptions, rather than indicating or implying that a referred apparatus or element must have a particular direction or be constructed and operated in a particular direction. Therefore, these terms should not be interpreted as limiting the specific scope of protection of the present invention.

It is to be noted that terms "first", "second" and the like in the description and claims of the present invention are used for distinguishing similar objects rather than describing a specific sequence or a precedence order.

Terms "include" and "have" and any variations thereof in the specification of the present invention and the claims are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

In the description of the present invention, it is to be further noted that, unless otherwise clearly specified and limited, the terms "disposed", "mounted", "connected" and "connect" should be interpreted broadly. For example, the term "connect" may be fixed connection, detachable connection or integral construction. As an alternative, the term "connect" may be mechanical connection, or electrical connection. As an alternative, the term "connect" may be direct connection, contact connection, or indirect connection through a medium, or communication in two elements. For those of ordinary skill in the art, specific meanings of the above terms in the present invention may be understood according to a specific condition.

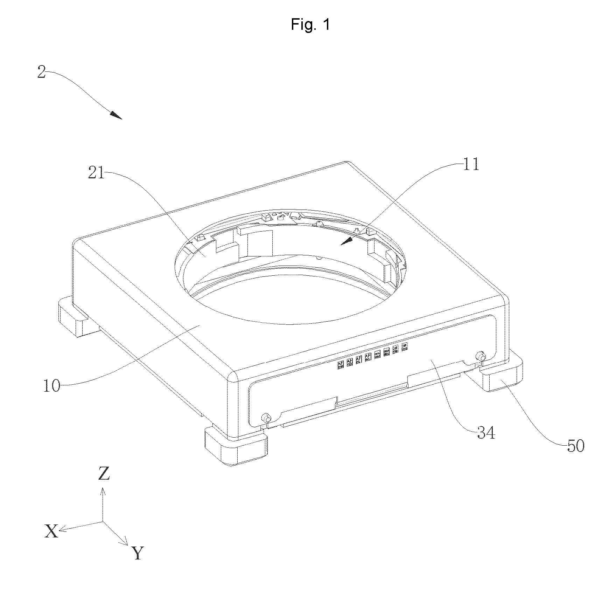

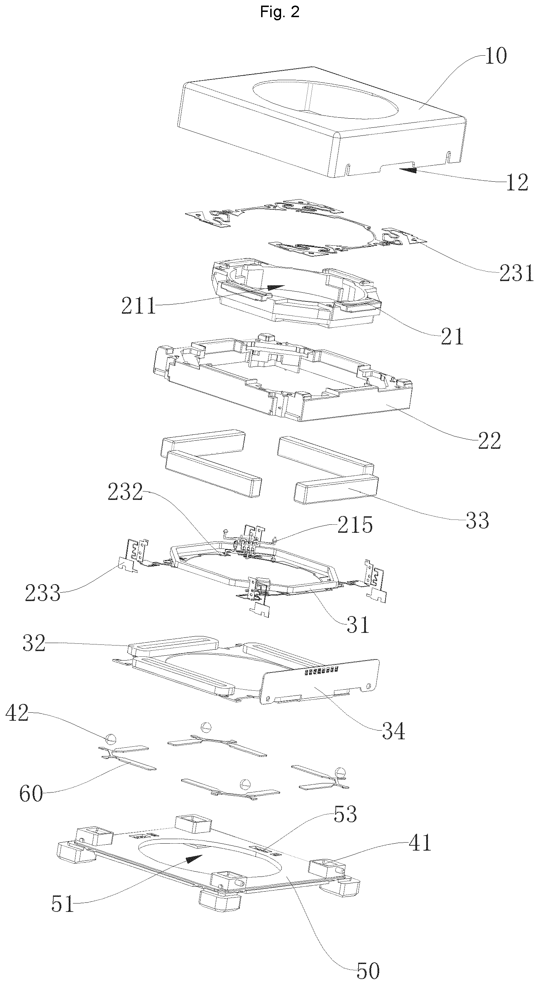

In an embodiment of the present invention, a lens driving apparatus 2 is provided, as shown in Figs. 1-4. The lens driving apparatus 2 includes a movable carrier 20, a base 50, a driving mechanism 30, a plurality of magnetic yoke pieces 60, a plurality of guide grooves 41, and a plurality of supporting mechanisms 342. The movable carrier 20 is configured to accommodate a lens assembly 1. The base 50 and the movable carrier 20 are correspondingly arranged in a spaced manner in a direction of an optical axis. The driving mechanism 30 includes at least one group of coils and at least one group of magnets 33. The at least one group of coils and the at least one group of magnets 33 are correspondingly arranged such that the driving mechanism 30 is configured to drive the movable carrier 20 to move relative to the base 50 in an orthogonal plane direction of an optical axis. Each of the plurality of magnetic yoke pieces 60 is mounted on the base 50. Each of the plurality of magnetic yoke pieces 60 includes a first portion 61, a second portion 62, and a connection portion 63. The first portion 61 and the second portion 62 integrally extend to two sides of the base 50 from two ends of the connection portion 63, respectively. The connection portion 63 is located at four corners of the base 50. The first portion 61 and the second portion 62 respectively face the at least one group of magnets 33. The plurality of guide grooves 41 are respectively provided on opposite surfaces of the movable carrier 20 and the base 50 in an inward-concave manner. Each of the plurality of supporting mechanisms 342 is accommodated in each of the plurality of guide grooves 41. Each of the plurality of magnetic yoke pieces 60 extends to a corresponding position of the at least one group of magnets 33 from a corresponding position of the guide groove 41. Each of the plurality of supporting mechanisms 42 rollably supports the movable carrier 20 to perform displacement in the orthogonal plane direction of the optical axis. Therefore, through a magnetic attraction force generated between each of the plurality of magnetic yoke pieces 60 and the at least one group of magnets, the stability of the movable carrier 20 in the camera module is maintained, an effect of centering is recovered, and the movable carrier 20 is effectively prevented from falling off as the camera module is shaken or inverted. Meanwhile, each of the plurality of supporting mechanisms 42 in each of the plurality of guide groove 41 is able to relatively move between the base 50 and the movable carrier 20.

In an embodiment, an orthogonal coordinate system (X, Y, Z) is configured for description. A Z direction is the direction of the optical axis, and an anteroposterior direction; an X direction and a Y direction orthogonal to the Z direction are configured as orthogonal directions of the optical axis; the X direction is a vertical direction (or a horizontal direction), and the Y direction is the horizontal direction (or the vertical direction); a plane orthogonal to the optical axis is a plane formed by the X direction and the Y direction; "a radial direction" is a direction orthogonal to the Z direction; and "an axial direction" means a corresponding setting between two orthogonal planes of the Z direction, including not only a direction parallel to the Z direction, but also a direction approaching parallel to the Z direction, as shown in Fig. 1.

The movable carrier 20 includes an AF carrier 21 and an OIS carrier 22. The AF carrier 21 accommodates the lens assembly 1, and the OIS carrier 22 accommodates the AF carrier 21. The base 50 and the OIS carrier 22 are correspondingly arranged in a spaced manner in the direction of the optical axis. The driving mechanism 30 includes an AF coil 31, an OIS coil 32, and a group of magnets 33. The AF coil 31 is arranged at the periphery of the AF carrier 21, the AF coil 31 and the at least one group of magnets 33 are radially arranged opposite to each other, the at least one OIS coil 32 is arranged above the base 50, and the at least one OIS coil 32 and the at least one group of magnets 33 are axially arranged opposite to each other. The plurality of guide grooves 41 are respectively provided on opposite surfaces of the OIS carrier 32 and the base 50 in an inward-concave manner, and a guide groove 41 on the base 50 of the plurality of guide grooves is higher than a side of the base 50 to accommodate the at least one OIS coil 32 at the side of the base 50. Each of the plurality of supporting mechanisms 342 is accommodated in each of the plurality of guide grooves 41. Each of the plurality of supporting mechanisms 342 moves in multiple degrees of freedom along a plane in each of the plurality of guide grooves 41. Therefore, the at least one OIS coil 32 and the at least one group of magnets 33 form a first magnetic field loop to drive the OIS carrier 22 to move (i.e., moving in the X/Y direction) relative to the base 50 in the orthogonal plane direction of the optical axis, so as to compensate jitter during photographing, thereby realizing jitter correction. The AF coil 31 and the at least one group of magnets 33 form a second magnetic field loop to drive the AF carrier 21 to move in the direction of the optical axis (i.e., the Z-axis direction, and subsequently, the Z-axis direction is used to represent the direction of the optical axis), so as to achieve clear focusing, thereby realize AF. Through a planar structure of each of the plurality of guide grooves 41, each of the plurality of supporting mechanisms 42 supports the OIS carrier 22 to move in multiple degrees of freedom along the orthogonal plane of the optical axis.

In an embodiment, the driving mechanism 30 further includes a circuit board 34. The circuit board 34 is attached to the base 50. The at least one group of magnets 33 is fixed on a side of the OIS carrier 22. The at least one OIS coil 32 is attached to a side of the circuit board 34 and is arranged opposite to the at least one group of magnets 33 in the direction of an optical axis. The at least one OIS coil 32 is arranged corresponding to the at least one group of magnets 33, such that the at least one OIS coil 32 and the at least one group of magnets 33 are able to be completely aligned in the direction of the optical axis. Corresponding arrangement may also not refer to complete alignment in the direction of the optical axis. There may be eccentric arrangement between the at least one OIS coil 32 and the at least one group of magnets 33. However, a plane in which the at least one group of magnets 33 is located and a plane in which the at least one OIS coil 32 or each of the plurality of magnetic yoke pieces 60 is located are always parallel. The circuit board 34 is attached to the upper surface of the base 50. The at least one OIS coil 32 needs to be connected to the circuit board 34 on the base 50. Since the space that the circuit board 34 on the side of the base 50 bonds the at least one OIS coil 32 is limited, the position of each of the at least one group of magnets 33 is limited by the OIS carrier 22, causing available spaces of the two components to be different, and thus resulting in inconsistent centers of the at least one OIS coil 32 and the at least one group of magnets 33.

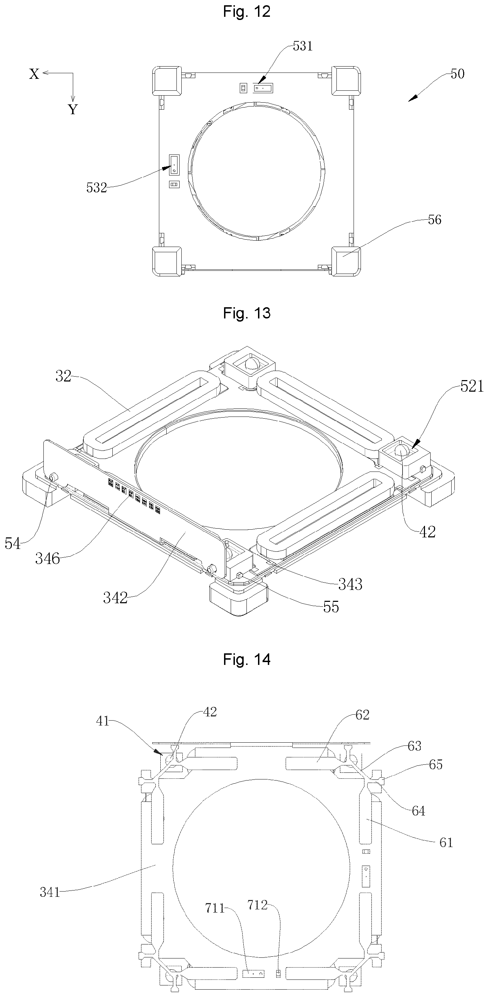

In an embodiment, the circuit board 34 is a flexible printed circuit board 34; the circuit board 34 includes an flexible printed circuit board bottom surface 341 and an flexible printed circuit board side surface 342; the flexible printed circuit board bottom surface 341 is attached to the upper surface of the base 50; the at least one OIS coil 32 is attached to a side of the flexible printed circuit board bottom surface 341; the flexible printed circuit board side surface 342 is integrally bent and extends in a direction from the flexible printed circuit board bottom surface 341 to the OIS carrier 22; the flexible printed circuit board side surface 342 and the OIS carrier 22 are radially arranged opposite to each other; and a plurality of welding points 346 are provided at an upper part of the flexible printed circuit board side surface 342, as shown in Fig. 13.

In an embodiment, the lens driving apparatus 2 further includes a housing 10. The housing 10 covers the movable carrier 20 and the base 50. The housing 10 is arranged outside the lens driving apparatus 2, and accommodates other elements inside the lens driving apparatus 2 in an internal space thereof, so as to protect the elements inside the lens driving apparatus 2 and guarantee the stability of the entire structure. The housing 10 is provided with a light hole 11 and an avoidance hole 12. The light hole 11 is configured to accommodate an optical lens structure to allow external light to enter. Motor welding points are located on a side surface of the housing and close to one side of the light hole 11. The flexible printed circuit board side surface 342 of the flexible printed circuit board 34 is bent from the flexible printed circuit board bottom surface 341 and then extends to the welding point 346 of the side surface of the motor. The avoidance hole 12 is arranged in corresponding positions of the housing 10 and the flexible printed circuit board side surface 342 to avoid the bending of the flexible printed circuit board 34, such that the bent flexible printed circuit board 34 passes through the avoidance holes 12 to cause the welding point 346 on the flexible printed circuit board side surface 342 to be connected to the welding point of the side surface of the motor and communicate with an external power supply apparatus, thereby providing a current required for motor operation.

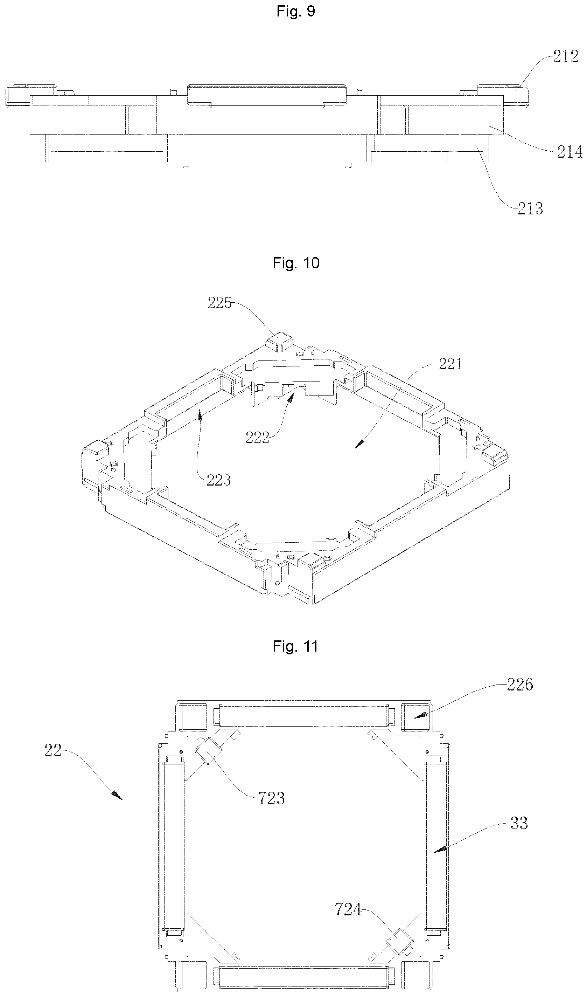

In an embodiment, the at least one group of magnets 33 is a dual-purpose magnet, that is, the at least one OIS coil 32 and the AF coil 31 share the at least one group of magnets 33. The AF carrier 21 is provided with a supporting portion 212, a mounting portion 213, and a connecting portion 214, the connecting portion 214 is integrally connected to the supporting portion 212 and the mounting portion 213, the supporting portion 212 protrudes outward and bears against the at least one group of magnets 33, the AF coil 31 is arranged at the periphery of the mounting portion 213, and a position of the mounting portion 213 is lower than that of the connecting portion 214 to cause the AF coil 31 to maintain between the mounting portion 213 and the connecting portion 214. That is to say, the AF carrier 21 is provided with an AF hole 211 for mounting the lens assembly to allow the external light to enter through an optical lens. The connecting portion 214 is located between the supporting portion 212 and the mounting portion 213. The supporting portion 212 and the connecting portion 214 protrude outward step by step, such that an accommodating space is formed between the connecting portion 214 and the mounting portion 213 to wind the AF coil 31 around the mounting portion 213. Meanwhile, the accommodating space is formed between the supporting portion 212 and the connecting portion 214 to bear against the supporting portion 212 above the at least one group of magnets 33. The AF coil 31 is located on a lower side of the AF carrier 21. The at least one group of magnets 33 and the AF coil 31 are radially arranged opposite to each other, such that the AF coil 31 is flush with the surface of the side surface of the AF carrier 21 after winding, a relative mounting space between the AF carrier 21 and the OIS carrier 22 is fully used, and the overall quality of the AF carrier 21 is reduced while the stability of the AF carrier 21 is guaranteed, thereby reducing requirements for the driving force of the AF carrier 21, as shown in Fig. 9.

In an embodiment, the movable carrier 20 further includes an elastic support member 23; the elastic support member 23 is connected to the AF carrier 21 and the OIS carrier 22 such that the elastic support member 23 is able to maintain the AF carrier 21 in a center state of the OIS carrier 22; the elastic support member 23 includes an upper elastic piece 231, a lower elastic piece 232, and a plurality of side elastic pieces 233; the upper elastic piece 231 is movably connected to upper surfaces of the AF carrier 21 and the OIS carrier 22; the lower elastic piece 232 is movably connected to lower surfaces of the AF carrier 21 and the OIS carrier 22; and each of the plurality of side elastic pieces 233 is electrically connected to the circuit board 34 and the upper elastic piece 231 or the lower elastic piece 232 to electrically conduct an embedded circuit 215 in the AF carrier 21.

In an embodiment, the lens driving apparatus 2 further includes a first sensing mechanism 71 and a second sensing mechanism 72; the first sensing mechanism 71 is mounted on the back of the circuit board 34 and is arranged opposite to the at least one group of magnets 33 to detect positions of the at least one group of magnets 33 and the OIS carrier 22; the base 50 is provided with a sensor mounting hole 53; the sensor mounting hole 53 is located between two adjacent magnetic yoke pieces in the plurality of magnetic yoke pieces 60; and the first sensing mechanism 71 is accommodated in the sensor mounting hole 53 of the base 50. The second sensing mechanism 72 includes an AF structure IC controller 721, an AF position sensor 722, and an AF sensing magnet 723; the AF sensing magnet 723 is mounted in the OIS carrier 22; the AF position sensor 722 and the AF structure IC controller 721 are mounted in the AF carrier 21; the AF sensing magnet 723 and the AF position sensor 722 are radially arranged opposite to each other such that the AF position sensor 722 is able to sense a position of the AF carrier 21 moving relative to the AF sensing magnet 723 in the direction of the optical axis, thereby realizing more accurate FA; and the AF structure IC controller 721 controls a current of the AF coil 31 according to magnetic change data returned by the AF position sensor 722, so as to control a movement direction and stroke of the AF carrier 21.

That is to say, the AF position sensor 722 is located on one of the sides of the AF carrier 21. Accordingly, the AF sensing magnet 723 is arranged inside the radially-corresponding OIS carrier 22. Through the cooperation of the AF sensing magnet 723 and the AF position sensor 722, the position of the AF carrier 21 is sensed. Meanwhile, in order to guarantee the balance of the OIS carrier 22, the OIS carrier 22 is further provided with a weight 724, and the weight 724 and the AF sensing magnet 723 are respectively located at opposite corners of the OIS carrier 22, so as to guarantee the balance of the OIS carrier 22 during a moving process. The weight 724 may be a magnet, or may also be other metal materials, as long as the OIS carrier 22 maintains balanced, as shown in Fig. 11.

In an embodiment, the first sensor mounting hole 53 includes an X direction mounting hole 531 and a Y direction mounting hole 532; the first sensing mechanisms 71 are respectively mounted in the X direction mounting hole 531 and the Y direction mounting hole 532 to detect X direction displacement and Y direction displacement of the OIS carrier 22; the first sensing mechanism 71 includes an OIS structure IC controller 711 and an OIS position sensor 712; the OIS position sensor 712 is able to sense a position of the OIS carrier 22 moving relative to the base 50 along the orthogonal plane of the optical axis; and the OIS structure IC controller 711 is able to control the current of the at least one OIS coil 32 according to magnetic variations returned by the OIS position sensor 712, so as to control a movement direction and stroke of the OIS carrier 22, as shown in Fig. 12.

In an embodiment, the AF position sensor 722 and the OIS position sensor 712 are hall sensors.

That is to say, the at least one OIS coil 32 on the base 50 drives the optical lens 1 in the OIS carrier 22 to move in multi-degrees of freedom directions, so as to move in an X-axis direction and a Y-axis direction. The OIS position sensor 712 and the OIS structure IC controller 711 in the X-axis direction cooperate with each other to achieve the more accurate movement of the OIS carrier 22 in the X-axis direction. The OIS position sensor 712 and the OIS structure IC controller 711 in the Y-axis direction cooperate with each other to achieve the more accurate movement of the OIS carrier 22 in the Y-axis direction. Meanwhile, all of the first sensing mechanisms 71 are flush with a lower surface of the base 50 through the X direction mounting hole 531 and Y direction mounting hole 532 on the base 50, respectively. All of the first sensing mechanisms 71 are located right under the at least one group of magnets 33 to accurately sense a movement direction of the OIS carrier 22. All of the first sensing mechanisms 71 are electrically connected to the flexible printed circuit board bottom surface 341 of the flexible printed circuit board 34.

In an embodiment, the OIS carrier 22 is provided with a first accommodating cavity 222, a second accommodating cavity 223, and a supporting accommodating space 224. The first accommodating cavity 222 is provided at an opposite corner of the OIS carrier 22. The AF sensing magnet 723 and the weight 724 are symmetrically accommodated in the first accommodating cavity 222. The second accommodating cavity 223 is located on the side surface of the OIS carrier 22. The second accommodating cavity 223 is able to accommodate the at least one group of magnets 33. The at least one group of magnets 33 are uniformly distributed along the four side surfaces of the OIS carrier 22. The supporting accommodating space 224 accommodates the supporting portion 212 of the AF carrier 21. That is to say, the OIS carrier 22 is provided with an OIS hole 221 for accommodating the AF carrier 21. The AF carrier 21 is connected to the OIS carrier 22 through the supporting portion 212 on the side. The supporting accommodating space 224 is arranged at a position on the upper surface of the OIS carrier 22 corresponding to the supporting portion 212. Through the arrangement of the supporting accommodating space 224, there is a certain space preserved at the bottom of the AF carrier 21 and the bottom of the motor, so as to conveniently mount the at least one OIS coil 32, thereby effectively avoiding the at least one OIS coil 32 on the base 50. Furthermore, a space is also provided for the movement of the AF carrier 21, such that the AF carrier 21 always moves above the at least one group of magnets 33 without colliding with the at least one OIS coil 32, and the mounting of the lower elastic piece on the lower surface of the AF carrier is also facilitated, as shown in Fig. 10.

In an embodiment, the OIS carrier 22 is further provided with bumps 225. The bumps 225 protrude from four corners on the upper surface of the OIS carrier 22. The bumps 225 protrude a certain height from the upper surface of the OIS carrier 22, such that a certain movement space is preserved for the movement of the AF carrier 21 in the direction of the optical axis.

The AF coil 31 is located on a lower side of the AF carrier 21, facilitating the consistency between the center of the AF coil 31 and the center of the at least one group of magnets 33, thereby providing a maximum AF driving force. If the AF coil 31 is located on a middle side surface of the AF carrier 21, the size of the AF carrier 21 is increased, and the AF coil 31 is led to be located at a position of an upper part of the at least one group of magnets 33. When moving a certain distance in the Z-axis direction, the AF coil 31 rises above the at least one group of magnets 33, enlarging a distance between the AF coil 31 and the at least one group of magnets 33, resulting in insufficient AF driving force, and thus affecting adjustment accuracy.

In an embodiment, each of the plurality of guide grooves 41 is of a planar square groove structure; each of the plurality of supporting mechanisms 342 is a ball to cause each of the plurality of supporting mechanisms 342 to move in multiple degrees of freedom along a plane in each of the plurality of guide grooves41; and each of the plurality of guide grooves 41 on the base 50 is higher than a side of the base 50 to accommodate the at least one OIS coil 32 at the side of the base 50, so as to cause the at least one OIS coil 32 to be not higher than the plurality of guide grooves 41 of the base 50. That is to say, each of the plurality of guide grooves 41 is not a specific track in the X-axis direction or the Y-axis direction. The planar square groove structure of each of the plurality of guide grooves 41 is able to provide support to the OIS carrier 22 without direction limitations, such that the balls 42 are integrated in the same pair of each of the plurality of guide grooves 41 by moving in the X/Y directions, facilitating the reduction in friction force limitation to the specific track. Displacement accuracy and stabilization strokes are improved by means of multi-degree of free movement, the internal space of the motor is fully used. Furthermore, each of the plurality of guide grooves 41 may also be a circular groove, and a diameter of the circular groove is greater than a diameter of each of the ball 42.

In an embodiment, a ball base 52 and a second guide groove 521 are arranged on the base 50; the ball base 52 integrally protrudes upwards from the positions of the four corners of the base 50; the second guide groove 521 is provided in the ball base 52; the ball base 52 protrudes from the flexible printed circuit board bottom surface 341 of the circuit board 34; the at least one OIS coil 32 is not higher than the ball base 52; the OIS carrier 22 is provided with a first guide groove 226; the first guide groove 226 corresponds to the second guide groove 521; balls 42 are accommodated in the first guide groove 226 and the second guide groove 521; a positioning pillar 54 is arranged on the ball base 52; the flexible printed circuit board side surface 342 is provided with a positioning hole 3421; the positioning pillar 54 extends from one side of the ball base 52 to the positioning hole 3421; and the positioning pillar 54 is mated with the positioning hole 3421 to cause the positioning pillar 54 to fix the flexible printed circuit board side surface 342, so as to guarantee the mounting accuracy of the flexible printed circuit board 34, and facilitate subsequent accurate motor welding. That is to say, the balls 42 at the bottom surface of the OIS carrier 22 may assist in the movement of the OIS carrier 22. Under the driving of the at least one group of magnets 33 and the at least one OIS coil 32, the OIS carrier 22 moves relative to the base 50 in the X/Y direction to drive the lens assembly 1 to move, so as to achieve jitter correction.

In an embodiment, the base 50 is provided with a base hole 51 to allow light in the optical lens 1 to pass through. The at least one OIS coils 32 are located on the four sides of the base 50 by surrounding the base hole 51. The second guide groove 521 and the base 50 are integrally molded in an injection manner. The ball base 52 protrudes a certain height from the side surface of the base 50, such that the second guide groove 521 and the first guide groove 226 cooperate with each other to form an accommodating space of the balls 42, and a mounting space is also preserved for the at least one OIS coil 32, so as to accommodate the at least one OIS coil 32 in the space formed by the ball bases 52 on the two sides, thereby fully using the internal space of the motor, and guaranteeing the movement accuracy of the OIS carrier 22. The first guide groove 226 and the second guide groove 521 may not only be of a square groove structure, but also be of a hemispherical structure inside. The balls 42 move in different degree of freedom directions in an internal space formed by the first guide groove 226 and the second guide groove 521. A specific movement direction is limited by a direction of the force applied to the OIS carrier 22.

In an embodiment, a number of the plurality of magnetic yoke pieces 60 is four, a number of the at least one OIS coils 32, a number of the at least one group of magnets 33, and the number of the plurality of magnetic yoke pieces 60 is the same, and the at least one group of magnets 33 is arranged along four sides of the OIS carrier 22.

In an embodiment, the connection portion 63 of each of the plurality of magnetic yoke pieces 60 is obliquely connected to the first portion 61 and the second portion 62, and a width of the connection portion 63 is less than those of the first portion 61 and the second portion 62. That is to say, the plurality of magnetic yoke pieces 60 are arranged along the four corners of the base 50. Each of the plurality of magnetic yoke pieces 60 corresponds to two adjacent magnets 33, such that the first sensing mechanisms 71 arranged on the base 50 is effectively avoided. Each of the plurality of magnetic yoke pieces 60 also forms a magnetic attraction force with the at least one group of magnets 33 to limit the balls 42 in the plurality of guide grooves 41. Since the width of each of the plurality of magnetic yoke pieces 60 corresponding to each of the balls 42 is less than the width of each of the plurality of magnetic yoke pieces 60 corresponding to the at least one group of magnets 33, resistance to the movement of the OIS carrier 22 caused by each of the plurality of magnetic yoke pieces 60 is reduced while the running of the balls 34 is stabilized by the at least one group of magnetic attraction force between each of the plurality of magnetic yoke pieces 60 and the at least one group of magnets 33, such that the OIS carrier 22 rapidly resets to an initial position after operation, thereby reducing the requirements for driving force design of an entire module, as shown in Fig. 14.

In an embodiment, each of the plurality of magnetic yoke pieces 60 further includes an extending portion 64; the extending portion 64 extends outwards from the connection portion 63 at the four corners of the base 50; an outer end of each of the extending portion 64 has an enlarged portion 65; and a width of the extending portion 64 is less than those of the first portion 61 and the second portion 62, facilitating the simplification of an injection molding process. Each of the plurality of magnetic yoke pieces 60 is arranged inside the base 50 through the injection molding process. The width of each of the plurality of magnetic yoke pieces 60 is less than the width of the at least one group of magnets 33. Furthermore, the size and mounting position of each of the plurality of magnetic yoke pieces 60 need to be determined according to an entire design structure. By using simulation software, a force required for relative stabilization of the OIS carrier 22 and the base 50 is calculated, and then the size of each of the plurality of magnetic yoke pieces 60 is determined.

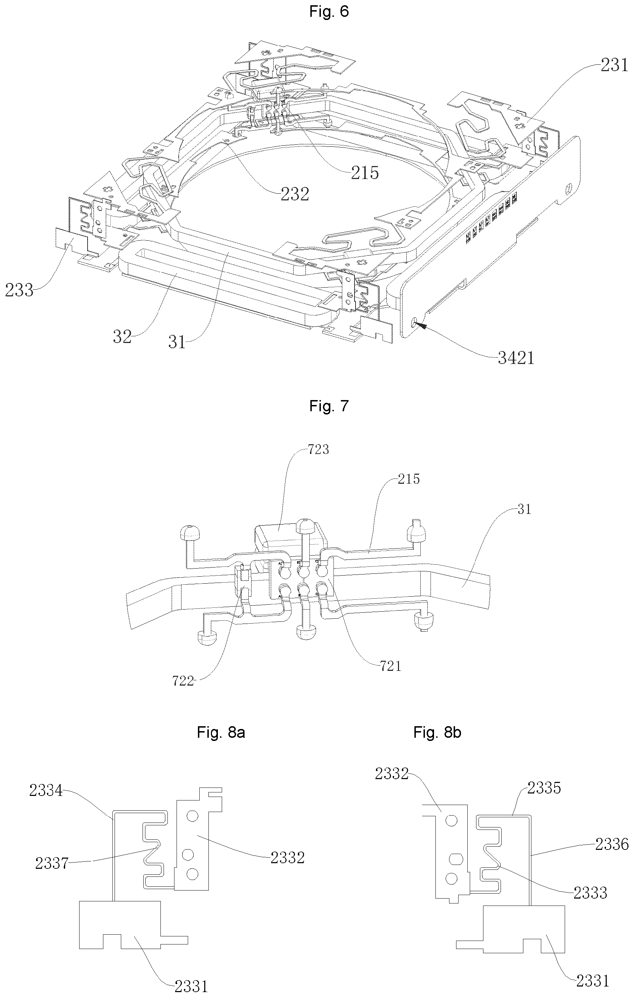

In an embodiment, the embedded circuit 215 is electrically connected to the AF coil 31 and the second sensing mechanism 72. One end of each of the plurality of side elastic pieces 233 is fixedly connected to the base 50, and the other end of each of the plurality of side elastic pieces 233 is fixedly connected to the OIS carrier 22, so as to cause the movement of the OIS carrier 22 along the orthogonal plane of the optical axis to reset; each of the plurality of side elastic pieces 233 includes a circuit exporting piece 2332, a circuit importing piece 2331, and a connection circuit 2333; the circuit importing piece 2331 is electrically connected to the circuit board 34; the circuit exporting piece 2332 is electrically connected to the upper elastic piece 231 or the lower elastic piece 232 such that the connection circuit 2333 is able to be electrically connected to the circuit exporting piece 2332 and the circuit importing piece 2331; the connection circuit 2333 includes a linear portion 2334 and a bending portion 2337; the bending portion 2337 is of a multi-section bending structure; the linear portion 2334 is electrically connected to the circuit importing piece 2331 and the bending portion 2337; and the bending portion 2337 is electrically connected to the linear portion 2334 and the circuit exporting piece 2332. Through the circuit structures of the linear portion 2334 and the plurality of side elastic pieces 233, each of the plurality of side elastic pieces 233 is conducted and acts as a retaining member. When the OIS carrier 22 drives the optical lens 1 to move along the X/Y direction, each of the plurality of side elastic pieces 23 is able to achieve a certain reset action, as shown in Fig. 6.

The linear portion 2334 further includes a horizontal portion 2335 and a vertical portion 2336. The horizontal portion 2335 and the vertical portion 2336 are connected to form a conduction circuit. The bending portion 2337 is able to be of an S-shaped structure to provide a movement margin for the OIS carrier 22 during moving, that is, a stroke of the OIS carrier 22 along the X/Y direction is preserved, such that, while the normal movement of the movable carrier 20 is guaranteed, a reset force of the OIS carrier 22 may be provided by using the elasticity of its own, as shown in Fig. 8a and Fig. 8b.

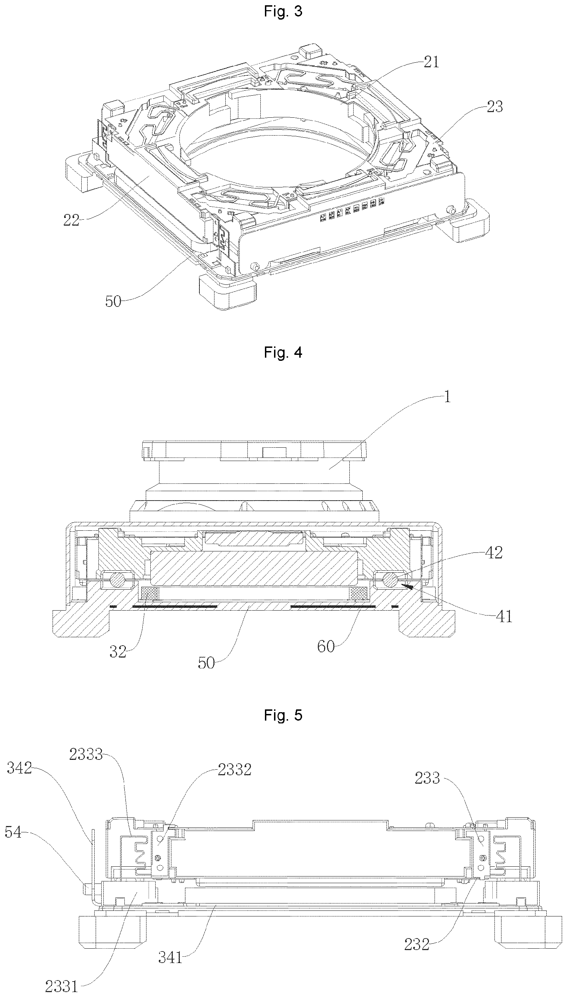

In an embodiment, the base 50 is provided with a plurality of positioning protrusions 55; the plurality of positioning protrusion 55 protrudes outward from a side surface of each of the ball bases 52; the positioning protrusion 55 is attached to the side surface of each of the ball bases 52 and fixedly connected to the positioning protrusion 55; the circuit exporting piece 2332 is attached to a side surface of the OIS carrier 22; the elastic support member 23 is provided with two groups of the plurality of side elastic pieces 233; each of the two groups of the plurality of side elastic pieces 233 is respectively located two side corners of the OIS carrier 22; each of the plurality of side elastic pieces 233 of one of the two side corners are electrically connected to the circuit board 34 and the upper elastic piece 231; each of the plurality of side elastic pieces 233 of the other one of the two side corners are electrically connected to the circuit board 34 and the lower elastic piece 232; and the embedded circuit 215 of the AF carrier 21 is molded in the AF carrier 21 in an injection manner, as shown in Fig. 5.

Welding point 346 preserved on the flexible printed circuit board side surface 342 of the flexible printed circuit board 34 is able to be connected to an external power supply, the flexible printed circuit board bottom surface 341 of the flexible printed circuit board 34 is able to conduct the at least one OIS coil 32 and the first sensing mechanism 71, conduction points 343, which are an OIS coil inlet point, an OIS coil outlet point, and a side elastic piece conduction point, are arranged at each of the four corners of the flexible printed circuit board bottom surface 341, the at least one OIS coil 32 and each of the plurality of side elastic pieces 233 are conducted through the flexible printed circuit board 34, and the upper elastic piece 231 and the lower elastic piece 232 are conducted through each of the plurality of side elastic pieces 233, so as to conduct the AF coil 31 and the second sensing mechanism 72 through the embedded circuit 215 of the AF carrier 21.

The embedded circuit 215 of the AF carrier 21 includes an IC interface, a position sensor interface, an upper elastic piece interface, a lower elastic piece interface, and two AF coil interfaces. By forming an AF conduction circuit, the AF structure IC controller 721 may control a current in the AF coil 31 according to information returned by the AF position sensor 722 to achieve real-time position adjustment of the AF carrier 21, thereby ensuring the accurate focusing of the optical lens driven by the AF carrier 21. The embedded circuit 215 is molded on one side of the AF carrier 21 in an injection manner. Through the cooperation of various circuits, while the normal operation of the OIS motor is guaranteed, the circuit design in the motor may be simplified, thereby further realizing the miniaturization of the entire structure.

In an embodiment, there may be only one pair of the plurality of side elastic pieces 233 having a conductive function, and the other pair of the plurality of side elastic pieces 233 is configured to improve reset.

The AF carrier 21 moves in the Z-axis direction while maintaining centering through the elastic support member 23, and the OIS carrier 22 moves in the X/Y direction by cooperating with the balls 42, such that the elements are highly compact while a lens is driven to move, thereby realizing the miniaturization of the entire structure.

In another embodiment of the present invention, a camera module includes the lens driving apparatus 2 as described above, a lens assembly, and a photosensitive assembly.

The lens assembly 1 is provided with at least one lens.

A base is arranged between the photosensitive assembly and the lens assembly such that the photosensitive assembly is able to sense light for imaging.

The camera module may also be a chip stabilization camera module. The base 50 is further provided with bottom corner protrusions 56. The bottom corner protrusions 56 are arranged at four corner positions of the lower surface of the base 50, and are integrally molded with the base 50. The bottom corner protrusions 56 are provided with sensing magnet mounting holes. Corresponding sensing elements are embedded in the sensing magnet mounting holes to sense a position of a photosensitive chip and return position information of the photosensitive chip to a control center, so as to cause the motor and the photosensitive chip to cooperate with each other to rapidly adjust the positions of two elements, thereby improving the imaging efficiency of the camera module. Furthermore, the photosensitive chip and the lens assembly are able to cooperate with each other to achieve the stabilization of a larger stroke, such that the problem of increased driving force requirements due to the increased size of the photosensitive chip and the increased mass of the lens assembly is solved, and the problem of the cooperative movement of the photosensitive chip and the lens assembly is solved while ensuring the accuracy of the movement of the motor-driven lens assembly.

The above describes the basic principle of the present invention, the main features and the advantages of the present invention. A person skilled in the art should understand that, the present invention is not limited by the above embodiments, and that the above embodiments and the description described in the specification only illustrate the principles of the present invention, and there are various variations and improvements to the present invention without departing from the spirit and scope of the present invention, all of which fall within the scope of the claimed invention. The scope of protection claimed by the present invention is defined by the appended claims and equivalents thereof.

## Claims

1. A lens driving apparatus, comprising:
a movable carrier, configured to accommodate a lens assembly;
a base, wherein the base and the movable carrier are correspondingly arranged in a spaced manner in a direction of an optical axis;
a driving mechanism, comprising at least one group of coils and at least one group of magnets, wherein the at least one group of coils and the at least one group of magnets are correspondingly arranged such that the driving mechanism is configured to drive the movable carrier to move relative to the base in an orthogonal plane direction of the optical axis; and
a plurality of magnetic yoke pieces, mounted on the base, wherein each of the plurality of magnetic yoke pieces comprises a first portion, a second portion, and a connection portion, the first portion and the second portion integrally extend to two sides of the base from two ends of the connection portion, respectively, all of the connection portions are located at four corners of the base, and the first portion and the second portion respectively face the at least one group of magnets.

2. The lens driving apparatus as claimed in claim 1, wherein the connection portion of each of the plurality of magnetic yoke pieces is obliquely connected to the first portion and the second portion, and a width of the connection portion is less than those of the first portion and the second portion.

3. The lens driving apparatus as claimed in claim 2, wherein each of the plurality of magnetic yoke pieces further comprises an extending portion, the extending portion extends outwards from the connection portions at the four corners of the base, an outer end of each of the extending portion has an enlarged portion, and a width of the extending portion is less than those of the first portion and the second portion.

4. The lens driving apparatus as claimed in claim 1, further provided with a plurality of guide grooves and a plurality of supporting mechanisms, wherein each of the plurality of guide grooves is respectively provided on opposite surfaces of the movable carrier and the base in an inward-concave manner, each of the plurality of supporting mechanisms is accommodated in each of the plurality of guide grooves, each of the plurality of magnetic yoke pieces extends to a corresponding position of the at least one group of magnets from a corresponding position of the plurality of guide grooves, and the supporting mechanism rollably supports the movable carrier to perform displacement in the orthogonal plane direction of the optical axis.

5. The lens driving apparatus as claimed in claim 4, wherein each of the plurality of guide grooves is of a planar square groove structure, each of the plurality of supporting mechanisms is a ball to cause each of the plurality of supporting mechanisms to move in multiple degrees of freedom along a surface in each of the plurality of guide grooves, and each of the plurality of guide grooves on the base is higher than a side of the base to accommodate the at least one group of coils at the side of the base, so as to cause the at least one group of coils to be not higher than each of the plurality of guide grooves on the base.

6. The lens driving apparatus as claimed in claim 1, wherein each of the plurality of magnetic yoke pieces is arranged in the base through an injection molding process.

7. The lens driving apparatus as claimed in any one of claims 1 to 6, wherein the driving mechanism comprises at least one Optical Image Stabilization (OIS) coil and a circuit board, the circuit board is attached to the base, the movable carrier comprises an OIS carrier, the at least one group of magnets is fixed on a side of the OIS carrier, the at least one OIS coil is attached to a side of the circuit board and is arranged opposite to the at least one group of magnets in the direction of the optical axis, the at least one OIS coil and the at least one group of magnets form a first magnetic field loop to drive the OIS carrier to move relative to the base in the orthogonal plane direction of the optical axis for jitter correction.

8. The lens driving apparatus as claimed in claim 7, further comprising a first sensing mechanism, wherein the first sensing mechanism is mounted on the back of the circuit board and is arranged opposite to the at least one group of magnets to detect positions of the at least one group of magnets and the OIS carrier, the base is provided with a first sensor mounting hole, the first sensor mounting hole is located between two adjacent magnetic yoke pieces in the plurality of magnetic yoke pieces, and the first sensing mechanism is accommodated in the first sensor mounting hole of the base.

9. The lens driving apparatus as claimed in claim 8, wherein the first sensor mounting hole comprises an X direction mounting hole and a Y direction mounting hole, the first sensing mechanism is respectively mounted in the X direction mounting hole and the Y direction mounting hole to detect X direction displacement and Y direction displacement of the OIS carrier, the first sensing mechanism comprises an OIS structure IC controller and an OIS position sensor, the OIS position sensor is able to sense a position of the OIS carrier moving relative to the base along an orthogonal plane of the optical axis, and the OIS structure IC controller is able to control a movement direction and stroke of the OIS carrier.

10. The lens driving apparatus as claimed in claim 7, wherein the circuit board is a flexible printed circuit (FPC) board, the circuit board comprises an flexible printed circuit board bottom surface and an flexible printed circuit board side surface, the flexible printed circuit board bottom surface is attached to an upper surface of the base, the at least one OIS coil is attached to a side of the flexible printed circuit board bottom surface, the flexible printed circuit board side surface is integrally bent and extends in a direction from the flexible printed circuit board bottom surface to the OIS carrier, the flexible printed circuit board side surface and the OIS carrier are radially arranged opposite to each other, and a plurality of welding points are provided at an upper part of the flexible printed circuit board side surface.

11. The lens driving apparatus as claimed in claim 10, wherein a ball base and a second guide groove are arranged on the base, the ball base integrally protrudes upwards from a position of the four corners of the base, the second guide groove is provided in the ball base, the ball base protrudes from the flexible printed circuit board bottom surface of the circuit board, the at least one OIS coil is not higher than the ball base, the OIS carrier is provided with a first guide groove, the first guide groove corresponds to the second guide groove, balls are accommodated in the first guide groove and the second guide groove, a positioning pillar is arranged on the ball base, the flexible printed circuit board side surface is provided with a positioning hole, the positioning pillar extends from one side of the ball base to the positioning hole, and the positioning pillar is mated with the positioning hole to cause the positioning pillar to fix the flexible printed circuit board side surface.

12. The lens driving apparatus as claimed in claim 11, wherein the movable carrier further comprises an Auto Focus (AF) carrier, the AF carrier is movably placed in the OIS carrier, a lens assembly is mounted in the AF carrier, the driving mechanism further comprises an AF coil, the AF coil is arranged at the periphery of the AF carrier, the AF coil and the at least one group of magnets are radially arranged opposite to each other, and the AF coil and the at least one group of magnets form a second magnetic field loop to drive the AF carrier to move in the direction of the optical axis for AF.

13. The lens driving apparatus as claimed in claim 12, wherein the AF carrier is provided with a supporting portion, a mounting portion, and a connecting portion, the connecting portion is integrally connected to the supporting portion and the mounting portion, the supporting portion protrudes outward and bears against the at least one group of magnets, the AF coil is arranged at the periphery of the mounting portion, and a position of the mounting portion is lower than that of the connecting portion to cause the AF coil to maintain between the mounting portion and the connecting portion.

14. The lens driving apparatus as claimed in claim 13, further comprises a second sensing mechanism, wherein the second sensing mechanism comprises an AF structure IC controller, an AF position sensor, and an AF sensing magnet, the AF sensing magnet is mounted in the OIS carrier, the AF position sensor and the AF structure IC controller are mounted in the AF carrier, the AF sensing magnet and the AF position sensor are radially arranged opposite to each other such that the AF position sensor is able to sense a position of the AF carrier moving relative to the AF sensing magnet in the direction of the optical axis, and the AF structure IC controller is able to control a movement direction and stroke of the AF carrier.

15. The lens driving apparatus as claimed in claim 14, wherein the OIS carrier is provided with a first accommodating cavity, a second accommodating cavity, and a supporting accommodating space, the first accommodating cavity is provided at an opposite corner of the OIS carrier, the AF sensing magnet is accommodated in the first accommodating cavity such that the second accommodating cavity is able to accommodate the at least one group of magnets, and the supporting accommodating space accommodates the supporting portion of the AF carrier.

16. The lens driving apparatus as claimed in claim 12, wherein the movable carrier further comprises an elastic support member, the elastic support member is connected to the AF carrier and the OIS carrier such that the elastic support member is able to maintain the AF carrier in a center state of the OIS carrier, the elastic support member comprises an upper elastic piece, a lower elastic piece, and a plurality of side elastic pieces, the upper elastic piece is movably connected to upper surfaces of the AF carrier and the OIS carrier, the lower elastic piece is movably connected to lower surfaces of the AF carrier and the OIS carrier, and each of the plurality of side elastic pieces is electrically connected to the circuit board and the upper elastic piece or the lower elastic piece to electrically conduct an embedded circuit in the AF carrier, so as to cause the embedded circuit to electrically connect the AF coil and the second sensing mechanism.

17. The lens driving apparatus as claimed in claim 16, wherein one end of each of the plurality of side elastic pieces is fixedly connected to the base, an other end of each of the plurality of side elastic pieces is fixedly connected to the OIS carrier, so as to cause the movement of the OIS carrier along the orthogonal plane of the optical axis to reset, each of the plurality of side elastic pieces comprises a circuit exporting piece, a circuit importing piece, and a connection circuit, the circuit importing piece is electrically connected to the circuit board, the circuit exporting piece is electrically connected to the upper elastic piece or the lower elastic piece such that the connection circuit is able to be electrically connected to the circuit exporting piece and the circuit importing piece, the connection circuit comprises a linear portion and a bending portion, the bending portion is of a multi-section bending structure, the linear portion is electrically connected to the circuit importing piece and the bending portion, and the bending portion is electrically connected to the linear portion and the circuit exporting piece.

18. The lens driving apparatus as claimed in claim 17, wherein the base is provided with a plurality of positioning protrusions, the positioning protrusion protrudes outward from a side surface of the ball base, the positioning protrusion is attached to the side surface of the ball base and fixedly connected to the positioning protrusion, the circuit exporting piece is attached to a side surface of the OIS carrier, the elastic support member is provided with two groups of the plurality of side elastic pieces, each of the two groups of the plurality of side elastic pieces is respectively located two side corners of the OIS carrier, the plurality of side elastic pieces of one of the two side corners are electrically connected to the circuit board and the upper elastic piece, the plurality of side elastic pieces of the other one of the two side corners are electrically connected to the circuit board and the lower elastic piece, and the embedded circuit of the AF carrier is molded in the AF carrier in an injection manner.

19. The lens driving apparatus as claimed in claim 7, wherein a number of the plurality of magnetic yoke pieces is four, a number of the at least one OIS coils, a number of the at least one group of magnets, and the number of the plurality of magnetic yoke pieces is the same, and the at least one group of magnets is arranged along four sides of the OIS carrier.

20. A camera module, comprising:
the lens driving apparatus as claimed in any one of claims 1 to 19;
a lens assembly, provided with at least one lens; and
a photosensitive assembly, wherein the base is arranged between the photosensitive assembly and the lens assembly such that the photosensitive assembly is able to sense light for imaging.

21. The camera module as claimed in claim 20, wherein the base is further provided with bottom corner protrusions; the bottom corner protrusions are arranged at four corner positions of a lower surface of the base; sensing elements are arranged in the bottom corner protrusions to sense a position of a photosensitive chip and return position information of the photosensitive chip to a control center; and the photosensitive chip is connected to a stabilization motor.

22. A lens driving apparatus, comprising:
a movable carrier, comprising an Auto Focus (AF) carrier and an Optical Image Stabilization (OIS) carrier, wherein the AF carrier accommodates a lens assembly, and the OIS carrier accommodates the AF carrier;
a base, wherein the base and the OIS carrier are correspondingly arranged in a spaced manner in a direction of an optical axis;
a driving mechanism, comprising an AF coil, an OIS coil, and a group of magnets, wherein the AF coil is arranged at the periphery of the AF carrier, the AF coil and the group of magnets are radially arranged opposite to each other, the OIS coil is arranged above the base, and the OIS coil and the group of magnets are axially arranged opposite to each other;
guide grooves, respectively provided on opposite surfaces of the OIS carrier and the base in an inward-concave manner, and a guide groove on the base of the guide grooves is higher than a side of the base to accommodate the OIS coil at the side of the base; and
supporting mechanisms, wherein each of the supporting mechanisms is accommodated in the guide groove, and the supporting mechanism moves in multiple degrees of freedom along a surface in the guide groove.

23. The lens driving apparatus as claimed in claim 22, wherein the guide groove is of a planar square groove structure, the supporting mechanism is a ball, and each of the supporting mechanisms rollably supports the movable carrier to perform displacement in an orthogonal plane direction of the optical axis.

24. The lens driving apparatus as claimed in claim 22, wherein the driving mechanism further comprises a circuit board, the circuit board is attached to the base, the group of magnets is fixed on a side of the OIS carrier, the OIS coil is attached to a side of the circuit board and is arranged opposite to the group of magnets in the direction of the optical axis, the OIS coil and the group of magnets form a first magnetic field loop to drive the OIS carrier to move relative to the base in the orthogonal plane direction of the optical axis for jitter correction, and the AF coil and the group of magnets form a second magnetic field loop to drive the AF carrier to move in the direction of the optical axis for AF.

25. The lens driving apparatus as claimed in claim 24, wherein the AF carrier is provided with a supporting portion, a mounting portion, and a connecting portion, the connecting portion is integrally connected to the supporting portion and the mounting portion, the supporting portion protrudes outward and bears against the group of magnets, the AF coil is arranged at the periphery of the mounting portion, and a position of the mounting portion is lower than that of the connecting portion to cause the AF coil to maintain between the mounting portion and the connecting portion.

26. The lens driving apparatus as claimed in claim 25, further comprises a second sensing mechanism, wherein the second sensing mechanism comprises an AF structure IC controller, an AF position sensor, and an AF sensing magnet, the AF sensing magnet is mounted in the OIS carrier, the AF position sensor and the AF structure IC controller are mounted in the AF carrier, the AF sensing magnet and the AF position sensor are radially arranged opposite to each other such that the AF position sensor is able to sense a position of the AF carrier moving relative to the AF sensing magnet in the direction of the optical axis, and the AF structure IC controller is able to control a movement direction and stroke of the AF carrier.

27. The lens driving apparatus as claimed in claim 26, wherein the OIS carrier is provided with a first accommodating cavity, a second accommodating cavity, and a supporting accommodating space, the first accommodating cavity is provided at an opposite corner of the OIS carrier, the AF sensing magnet is accommodated in the first accommodating cavity such that the second accommodating cavity is able to accommodate the group of magnets, and the supporting accommodating space accommodates the supporting portion of the AF carrier.

28. The lens driving apparatus as claimed in claim 27, wherein the movable carrier further comprises an elastic support member, the elastic support member is connected to the AF carrier and the OIS carrier such that the elastic support member is able to maintain the AF carrier in a center state of the OIS carrier, the elastic support member comprises an upper elastic piece, a lower elastic piece, and a plurality of side elastic pieces, the upper elastic piece is movably connected to upper surfaces of the AF carrier and the OIS carrier, the lower elastic piece is movably connected to lower surfaces of the AF carrier and the OIS carrier, and each of the plurality of side elastic pieces is electrically connected to the circuit board and the upper elastic piece or the lower elastic piece to electrically conduct an embedded circuit in the AF carrier, so as to cause the embedded circuit to electrically connect the AF coil and the second sensing mechanism.

29. The lens driving apparatus as claimed in claim 28, wherein one end of each of the plurality of side elastic pieces is fixedly connected to the base, an other end of each of the plurality of side elastic pieces is fixedly connected to the OIS carrier, so as to cause the movement of the OIS carrier along the orthogonal plane of the optical axis to reset, each of the plurality of side elastic pieces comprises a circuit exporting piece, a circuit importing piece, and a connection circuit, the circuit importing piece is electrically connected to the circuit board, the circuit exporting piece is electrically connected to the upper elastic piece or the lower elastic piece such that the connection circuit is able to be electrically connected to the circuit exporting piece and the circuit importing piece, the connection circuit comprises a linear portion and a bending portion, the bending portion is of a multi-section bending structure, the linear portion is electrically connected to the circuit importing piece and the bending portion, and the bending portion is electrically connected to the linear portion and the circuit exporting piece.

30. The lens driving apparatus as claimed in claim 29, wherein the circuit board is a flexible printed circuit (FPC) board, the circuit board comprises an flexible printed circuit board bottom surface and an flexible printed circuit board side surface, the flexible printed circuit board bottom surface is attached to an upper surface of the base, the OIS coil is attached to a side of the flexible printed circuit board bottom surface, the flexible printed circuit board side surface is integrally bent and extends in a direction from the flexible printed circuit board bottom surface to the OIS carrier, the flexible printed circuit board side surface and the OIS carrier are radially arranged opposite to each other, and a plurality of welding points are provided at an upper part of the flexible printed circuit board side surface.

31. The lens driving apparatus as claimed in claim 30, wherein a ball base and a second guide groove are arranged on the base, the ball base integrally protrudes upwards from the positions of the four corners of the base, the second guide groove is provided in the ball base, the ball base protrudes from the flexible printed circuit board bottom surface of the circuit board, the OIS coil is not higher than the ball base, the OIS carrier is provided with a first guide groove, the first guide groove corresponds to the second guide groove, balls are accommodated in the first guide groove and the second guide groove, a positioning pillar is arranged on the ball base, the flexible printed circuit board side surface is provided with a positioning hole, the positioning pillar extends from one side of the ball base to the positioning hole, and the positioning pillar is mated with the positioning hole to cause the positioning pillar to fix the flexible printed circuit board side surface.

32. The lens driving apparatus as claimed in claim 31, wherein the base is provided with a plurality of positioning protrusions, the positioning protrusion protrudes outward from a side surface of the ball base, the positioning protrusion is attached to the side surface of the ball base and fixedly connected to the positioning protrusion, the circuit exporting piece is attached to a side surface of the OIS carrier, the elastic support member is provided with two groups of the plurality of side elastic pieces, each of the two groups of the plurality of side elastic pieces is respectively located two side corners of the OIS carrier, the plurality of side elastic pieces of one of the two side corners are electrically connected to the circuit board and the upper elastic piece, the plurality of side elastic pieces of the other one of the two side corners are electrically connected to the circuit board and the lower elastic piece, and the embedded circuit of the AF carrier is molded in the AF carrier in an injection manner.

33. The lens driving apparatus as claimed in any one of claims 22 to 32, further comprising a plurality of magnetic yoke pieces, wherein the plurality of magnetic yoke pieces are mounted on the base, each of the plurality of magnetic yoke pieces comprises a first portion, a second portion, and a connection portion, the first portion and the second portion integrally extend to two sides of the base from two ends of the connection portion, respectively, the connection portion is located at four corners of the base, and the first portion and the second portion respectively face the group of magnets.

34. The lens driving apparatus as claimed in claim 33, wherein the connection portion is obliquely connected to the first portion and the second portion, a width of the connection portion is less than those of the first portion and the second portion, and each of the plurality of magnetic yoke pieces extends to a corresponding position of the group of magnets from a corresponding position of the guide groove.

35. The lens driving apparatus as claimed in claim 34, wherein each of the plurality of magnetic yoke pieces further comprises an extending portion, the extending portion extends outwards from the connection portions at the four corners of the base, an outer end of the extending portion has an enlarged portion, and a width of the extending portion is less than those of the first portion and the second portion.

36. The lens driving apparatus as claimed in claim 35, further comprising a first sensing mechanism, wherein the first sensing mechanism is mounted on the back of the circuit board and is arranged opposite to the group of magnets to detect positions of the group of magnets and the OIS carrier, the base is provided with a first sensor mounting hole, the first sensor mounting hole is located between two adjacent magnetic yoke pieces in the plurality of magnetic yoke pieces, and the first sensing mechanism is accommodated in the first sensor mounting hole of the base.

37. The lens driving apparatus as claimed in claim 36, wherein the first sensor mounting hole comprises an X direction mounting hole and a Y direction mounting hole, the first sensing mechanisms are respectively mounted in the X direction mounting hole and the Y direction mounting hole to detect X direction displacement and Y direction displacement of the OIS carrier, the first sensing mechanism comprises an OIS structure IC controller and an OIS position sensor, the OIS position sensor is able to sense a position of the OIS carrier moving relative to the base along an orthogonal plane of the optical axis, and the OIS structure IC controller is able to control a movement direction and stroke of the OIS carrier.

38. The lens driving apparatus as claimed in claim 35, wherein a number of the plurality of magnetic yoke pieces is four, a number of the OIS coils, a number of the group of magnets, and the number of the plurality of magnetic yoke pieces is the same, and the group of magnets are arranged along four sides of the OIS carrier.
